# EUROPÄISCHE PATENTSCHRIFT

(11) **EP 1 334 680 B1**
(45) Veröffentlichungstag und Bekanntmachung des Hinweises auf die Patenterteilung: **11.08.2004**
(21) Anmeldenummer: 03002159.6
(22) Anmeldetag: 03.02.2003
(51) Int. Cl.: A47J 43/24

(54) **Vorrichtung zum Abgiessen von Esswaren, wie z.B. Teigwaren, Reis, Gemüse oder Salat**
Device for pouring food , for example pasta, rice, vegetables or salade
Dispositif pour égouter des aliments, par exemple des pâtes, du riz, des légumes ou de la salade

(30) Priorität: 08.02.2002 IT MI20020238
(43) Veröffentlichungstag der Anmeldung: 13.08.2003
(73) Patentinhaber: BALLARINI PAOLO & FIGLI S.p.A., 46017 Rivarolo Mantovano (MN) (IT)
(72) Erfinder: Guaricci, Romeo, 00145 Roma (IT)
(74) Vertreter: Mayer, Hans Benno, Dipl.-Ing.

(56) Entgegenhaltungen:
- DE-A- 2 616 222
- FR-A- 1 104 499
- US-A- 2 896 788

## Beschreibung

Die vorliegende Erfindung bezieht sich auf eine Vorrichtung zum Abgießen von Eßwaren, wie z.B. Teigwaren, Reis, Gemüse, Salat oder ähnlichem.

Bekannt ist für das Abgießen, z.B. von frisch gegarten Teigwaren, gekochtem Gemüse oder gewaschenem Salat, einen gelöcherten Korb aus Metall oder aus Kunststoff zu verwenden.

Diese gelöcherten Körbe werden als Einzelteil hergestellt und weisen im allgemeinen halbkugelartige Form auf. Daraus ergibt sich, dass in einer Geschirrspülmaschine oder in einem Schrank oder aber in einem Hängeschrank einer modernen Einbauküche derartige Körbe einen beträchtlichen Platz beanspruchen, vor allem, wenn man berücksichtigt, dass die bekannten Körbe der genannten Art halbkugelartige Form und einen Durchmesser von 30 cm sowie eine Höhe von ca. 20 cm aufweisen.

Aufgabe der vorliegenden Erfindung ist es, eine neue Vorrichtung zum Abgießen von Eßwaren, wie gegarten Teigwaren, in einer großen Wassermenge gekochtem Gemüse oder frisch gewaschenem Salat vorzuschlagen, d.h. einen Korb, der während seiner Verwendung ein beträchtliches Volumen begrenzt, das die Bearbeitung einer großen Warenmenge erlaubt, und dieser Korb im Falle eines Verstauens flache Form annehmen kann, der minimalen Raum beansprucht.

Diese Aufgabe wird erfindungsgemäß mittels eines Korbes zum Abgießen von Eßwaren erreicht, der aus zwei Wänden besteht, die in der Gebrauchslage des Korbs einen kegelförmigen Raum begrenzen, wobei mit sich gegenüberliegenden Wandseiten, unter Zwischenfügen von Scharnieren, dreieckige Begrenzungswände verbunden sind, dass diese Begrenzungswände mittig über ein weiteres Scharnier verbunden sind, und vom unteren Ende einer Wand flache, bandförmige, parallele Halterungen abstehen, die bei Gebrauchslage des Korbes in parallele Ausnehmungen der gegenüberliegenden Wand eindringen.

In besonders vorteilhafter Weise weisen die gegenüberliegenden Wände Ausnehmungen auf, die Griffe bilden.

Die seitlichen dreieckigen Bregrenzungswände weisen in Übereinstimmung zur zentralen Verbindungslinie ein Profil auf, das ein Scharnier bildet.

Der nach der vorstehenden Erfindung ausgebildete Gegenstand wird nun mittels einer als Beispiel anzusehenden Ausführungsform im einzelnen in den beigefügten Zeichnungen dargestellt und im folgenden beschrieben. Es zeigen:
Fig. 1 den Korb in perspektivischer Ansicht und in Verwendungslage;
Fig. 2 den Korb in Vorderansicht, teilweise gefaltet;
Fig. 3 den Korb in vollständig gefalteter, perspektivischer Ansicht; und
Fig. 4 den gefalteten Korb während der Ablage in einer Schublade.

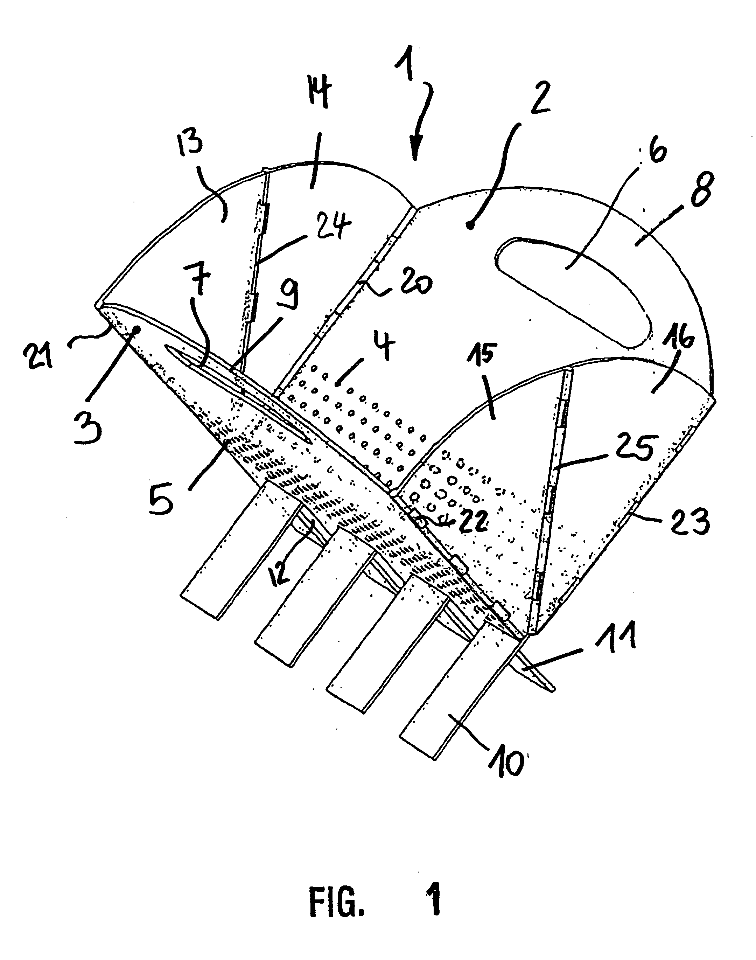

Wie man der Fig. 1 entnehmen kann, begrenzt der gesamthaft mit 1 gekennzeichnete Korb, mit Hilfe von sich gegenüberliegenden Wänden 2 und 3, einen kegelförmigen Raum.

Jede Wand 2 und 3 weist in der unteren Zone eine Reihe von Öffnungen 4, 5 auf, die das Austreten einer Flüssigkeit ermöglichen.

Oben weisen die Wände 2 und 3 Ausnehmungen 6, 7 zur Bildung von Griffen, z.B. eines Griffs 8, 9, zum Ergreifen und Bewegen des Korbes 1 auf.

An der Unterseite weisen die Wände 2, 3 Verlängerungen 10, 11 auf, die in entsprechende Öffungen 12 eindringen und so über die flachen bandförmigen Vorsprünge 10, 11 für den Korb 1 sichere Auflagen bilden.

Längs der äußeren Seiten der Wände 2, 3 sind Begrenzungswände 13, 14, 15, 16 befestigt, die etwa dreieckige Form aufweisen und deren Spitze nach unten gerichtet ist.

Die Wand 14 ist mit der Wand 2 gelenkig mittels eines Scharniers 20 verbunden. Die dreieckige Wand 13 ist mit Hilfe eines Scharniers 21 mit der Wand 3 verbunden, und die Wand 15 ist mittels eines Scharniers 22 mit der Wand 3 sowie die Wand 16 mittels eines Scharniers 23 mit der Wand 2 verbunden.

Längs der sich in gegenseitigem Kontakt stehenden Seiten sind die Seitenwände 13, 14 bzw. 15, 16 mit weiteren Scharnieren 24 bzw. 25 ausgerüstet, welche die Wände 13, 14 bzw. 15, 16 gelenkig miteinander verbinden.

Zur Vermeidung eines seitlichen, unerwünschten Austretens von Flüssigkeit aus dem Korb 1, ist erfindungsgemäß vorgesehen, dass nur der untere Teil der Wände 2 und 3 Öffnungen zum Austreten von Flüssigkeit aufweist, während die Seitenwände 13, 14, 15 und 16 aus einer geschlossenen Fläche bestehen.

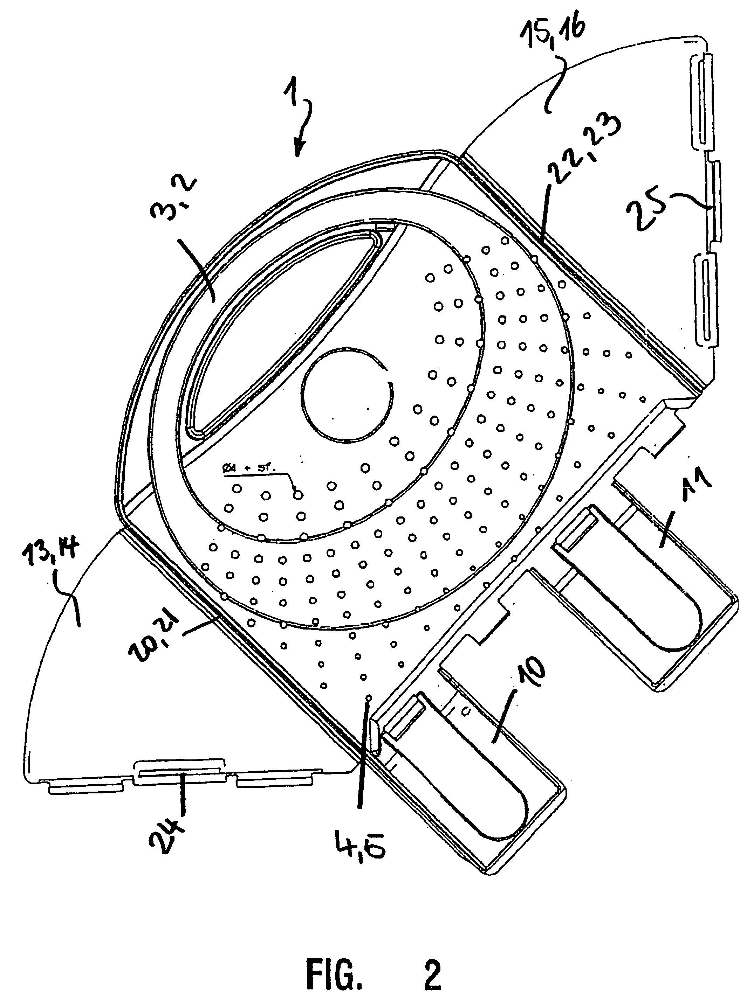

Aus Fig. 2 kann man die Vorrichtung 1 in teilweise gefalteter Lage entnehmen, wobei die Wände 2, 3 parallel zueinander angeordnet sind; auch die Seitenwände 13, 14 und 15, 16 sind nach außen um die Scharniere geschwenkt worden und sind parallel zueinander angeordnet. Ebenfalls sind die unteren bandförmigen Halterungen 10 und 11 parallel zueinander angeordnet.

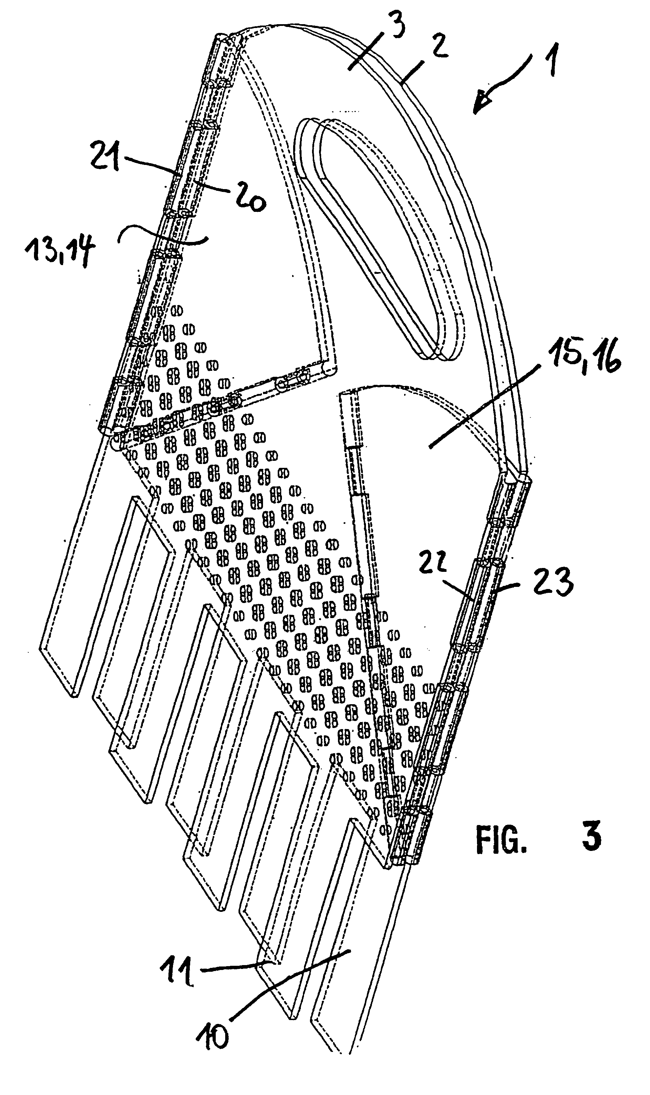

Der Fig. 3 kann man den vollständig gefalteten Behälter 1 entnehmen, d.h. die Wand 2 ist parallel zur Wand 3 angeordnet; auch die Halterungen 10, 11 sind parallel zueinander angeordnet. Vor einer parallelen Anordnung der Wände 2, 3 untereinander haben die dreieckigen Wände 15, 16 sowie die Seitenwände 13, 14 eine Schwenkbewegung um die Scharniere 22, 23 erfahren und die Wände 13, 14 eine Drehbewegung um die Scharniere 20, 21.

Bei Anordnung der Wände 13, 14 und 15, 16 im Inneren und zwischen den Hauptwänden 2, 3 des Behälters 1 ergibt sich eine flache Form der Vorrichtung, die kleinsten Raum für das Verstauen erfordert.

Die Wände 2, 3, 13, 14, 15, 16, aus denen der Behälter 1 zusammengesetzt ist und die den Raum begrenzen, der dazu dient, Eßwaren von Wasser zu befreien, bestehen in vorteilhafterweise aus Metall, vorzugsweise aus Edelstahl, oder diese Wände bestehen aus geeignetem wärmebeständigem Kunststoff.

So können auch die Scharniere 20, 21, 22, 23 aus geeignetem Metall oder Kunststoff hergestellt sein.

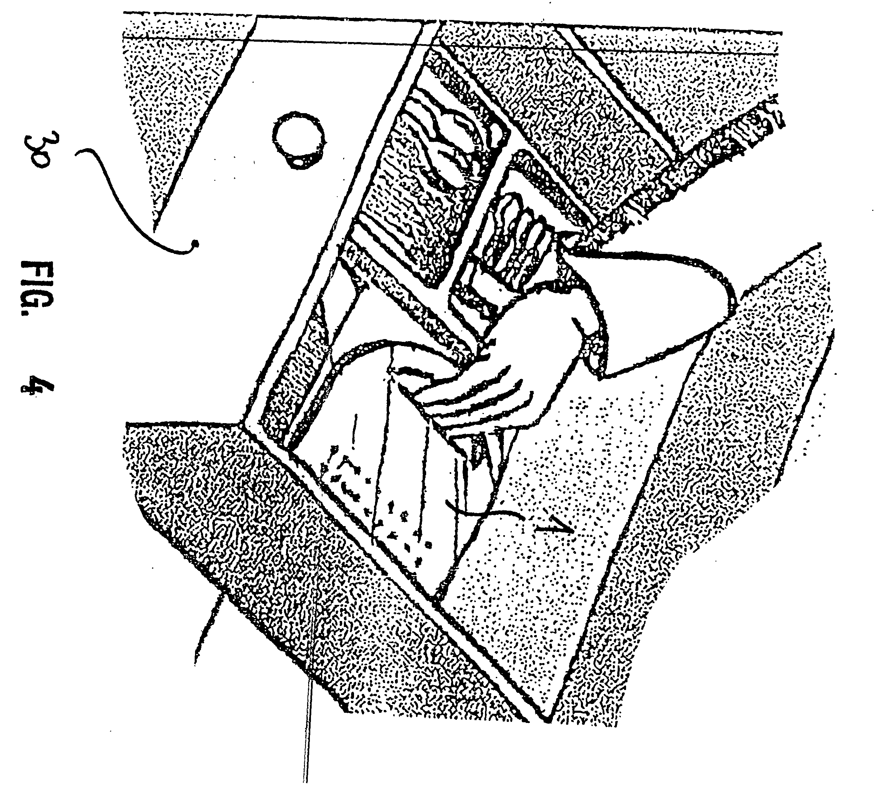

In Fig. 4 ist in perspektivischer Ansicht eine Schublade 30 dargestellt, die zu einer Serie zusammensetzbarer Möbel zur Schaffung einer Küche gehört; in dieser Schublade 30 kann die Vorrichtung 1 in Form eines flachen Körpers auf dem Boden der Schublade 30 verstaut werden, ohne zum Verstauen ein bemerkenswertes Volumen in Anspruch zu nehmen. Dies ist bei bekannten, zum Abgießen von Eßwaren bestimmten und als Einzelkörper ausgebildeten Vorrichtungen, die z.B. halbrunde Form aufweisen, stets der Fall.

Durch die Möglichkeit, die Vorrichtung 1 zur Verwirklichung eines flachen Körpers zu falten, ergeben sich auch bemerkenswerte Vorteile dann, wenn die Vorrichtung 1 in einer Geschirrspülmaschine unterzubringen ist. Bei richtigem Falten der Vorrichtung ist es möglich, diese im Innern der Geschirrspülmaschine parallel zu den zu waschenden Tellern anzuordnen.

Bei Verwendung des Korbs 1, wie in Fig. 1 dargestellt, blockieren die in den Korb 1 eingeführten Speisen die Wände 2, 3 in schräger Lage, fertig für den Einsatz.

## Patentansprüche

1. Vorrichtung (1) zum Abgießen von Eßwaren, wie z.B. Teigwaren, Reis, Gemüse oder Salat, mittels eines Korbes, der gelochte Zonen aufweist, **dadurch gekennzeichnet, dass** die Vorrichtung (1) aus zwei Wänden (2, 3) besteht, die in Gebrauchslage des Korbes (1) einen kegelförmigen Raum begrenzen, dass mit den sich gegenüberliegenden Seiten (20, 21, 22, 23) der Wände (2, 3), unter Zwischenfügen von Scharnieren (20, 21, 22, 23), dreieckige Begrenzungs- wände (13, 14, 15, 16) mittig über ein weiteres Scharnier verbunden sind, dass die Begrenzungswände (13, 14, 15, 16) über ein weiteres Scharnier (24, 25) verbunden sind und, vom unteren Ende einer Wand (2, 3), flache, bandförmige parallele Halterungen (10, 11) abstehen, die bei Gebrauchslage des Korbs (1) in parallele Ausnehmungen (12) der gegenüberliegenden Wand eindringen.

2. Vorrichtung zum Abgießen von Eßwaren, nach Patentanspruch 1, **dadurch gekennzeichnet, dass** die sich gegenüberliegenden Wände (2, 3) an der Oberseite Ausnehmungen (6, 7) aufweisen, um Griffe (8, 9) zu bilden.

3. Vorrichtung, zum Abgießen von Eßwaren, nach Patentanspruch 1, **dadurch gekennzeichnet, dass** die seitlichen Begrenzungswände (13, 14, 15, 16) dreieckige Form aufweisen und in Übereinstimmung mit einer zentralen Verbindungslinee ein Profil zur Bildung eines Scharniers (24, 25) aufnehmen.

4. Vorrichtung, zum Abgießen von Eßwaren, nach Patentanspruch 1, **dadurch gekennzeichnet, dass** jede Wand (2, 3) in der unteren Zone eine Reihe von Öffnungen (4, 5) für das Austreten einer Flüssigkeit aufweist.

5. Vorrichtung, zum Abgießen von Eßwaren, nach Patentanspruch 1, **dadurch gekennzeichnet, dass** die Begrenzungswände (13, 14, 15, 16) annähernd dreieckige Form mit einer nach unten gerichteter Spitze haben.

6. Vorrichtung, zum Abgießen von Eßwaren, nach Patentanspruch 5, **dadurch gekennzeichnet, dass** die Begrenzungswand (14) mittels eines Scharniers (20) gelenkig mit der Wand (2) verbunden ist, dass die Begrenzungswand (13) mittels eines Scharniers (21) gelenkig mit der Wand (3) verbunden ist, dass die Begrenzungswand (15) mittels eines Scharniers (22) mit der Wand (3) verbunden ist und die Begrenzungswand (16) mit Hilfe eines Scharniers (23) mit der Wand (2) verbunden ist.

7. Vorrichtung zum Abgießen von Eßwaren, nach Patentanspruch 1, **dadurch gekennzeichnet, dass** nur im unteren Teil der Wände (2, 3) Öffnungen (4, 5) für das Austreten der Flüssigkeit vorgesehen sind und dass die seitlichen Begrenzungwände (13, 14, 15, 16) aus geschlossenen Flächen, frei von Ausnehmungen bestehen.

8. Vorrichtung, zum Abgießen von Eßwaren, nach Patentanspruch 1, **dadurch gekennzeichnet, dass** die Begrenzungswände (15, 16, 13, 14) in Ruhelage der Vorrichtung parallel zwischen den Wänden (2, 3) angeordnet sind.

9. Vorrichtung, zum Abgießen von Eßwaren, nach Patentanspruch 1, **dadurch gekennzeichnet, dass** der Behälter (1) aus Wänden (2, 3, 13, 14, 15, 16) besteht, die aus Metall, vorteilhafterweise aus Edelstahl, bestehen.

10. Vorrichtung, zum Abgießen von Eßwaren, nach Patentanspruch 1, **dadurch gekennzeichnet, dass** die Wände (2, 3, 13, 14, 15, 16) des Behälters (1) aus wärmebeständigem Kunststoff bestehen.

11. Vorrichtung, zum Abgießen von Eßwaren, nach Patentanspruch 1, **dadurch gekennzeichnet, dass** die Scharniere (20, 21, 22, 23) aus Metall, vorteilhafterweise aus Edelstahl, bestehen.

12. Vorrichtung, zum Abgießen von Eßwaren, nach Patentanspruch 1, **dadurch gekennzeichnet, dass** die Scharniere (20, 21, 22, 23) aus wärmebeständigem Kunststoff bestehen.

## Claims

1. Apparatus (1) for draining comestibles, for example pasta, rice, vegetables or salad, by means of a basket which has perforated zones, **characterized in that** the apparatus (1) consists of two walls (2, 3) which, in the in-service position of the basket (1), bound a conical space, **in that** to the opposite sides (20, 21, 22, 23) of the walls (2, 3), with intermediate connections of hinges (20, 21, 22, 23), triangular bounding walls (13, 14, 15, 16) are centrally joined via a further hinge, **in that** the bounding walls (13, 14, 15, 16) are connected via a further hinge (24, 25) and, from the bottom end of a wall (2, 3), flat strip-shaped parallel holders (10, 11) protrude which, in the in-service position of the basket (1), penetrate parallel recesses (12) of the opposite wall.

2. Apparatus for draining comestibles according to Patent Claim 1, **characterized in that** the opposite walls (2, 3) have recesses (6, 7) on the top side to form grips (8, 9).

3. Apparatus for draining comestibles according to Patent Claim 1, **characterized in that** the lateral bounding walls (13, 14, 15, 16) have a triangular shape and, in correspondence with a central connection line, adopt a profile for forming a hinge (24, 25).

4. Apparatus for draining comestibles according to Patent Claim 1, **characterized in that** each wall (2, 3), in the bottom zone, has a number of openings (4, 5) for the escape of a liquid.

5. Apparatus for draining comestibles according to Patent Claim 1, **characterized in that** the bounding walls (13, 14, 15, 16) have an approximately triangular shape with a downward-pointed tip.

6. Apparatus for draining comestibles according to Patent Claim 5, **characterized in that** the bounding wall (14) is joined to the wall (2) so as to be able to pivot by means of a hinge (20), **in that** the bounding wall (13) is joined to the wall (3) so as to be able to pivot by means of a hinge (21), **in that** the bounding wall (15) is joined to the wall (3) by means of a hinge (22) and the bounding wall (16) is joined to the wall (2) using a hinge (23).

7. Apparatus for draining comestibles according to Patent Claim 1, **characterized in that** openings (4, 5) for the escape of the liquid are provided only in the bottom part of the walls (2, 3) and **in that** the lateral bounding walls (13, 14, 15, 16) consist of closed surfaces free from recesses.

8. Apparatus for draining comestibles according to Patent Claim 1, **characterized in that** the bounding walls (15, 16, 13, 14), in the idle position of the apparatus, are arranged in parallel between the walls (2, 3).

9. Apparatus for draining comestibles according to Patent Claim 1, **characterized in that** the vessel (1) consists of walls (2, 3, 13, 14, 15, 16) which consist of metal, advantageously stainless steel.

10. Apparatus for draining comestibles according to Patent Claim 1, **characterized in that** the walls (2, 3, 13, 14, 15, 16) of the vessel (1) consist of heat-resistant plastic.

11. Apparatus for draining comestibles according to Patent Claim 1, **characterized in that** the hinges (20, 21, 22, 23) consist of metal, advantageously stainless steel.

12. Apparatus for draining comestibles according to Patent Claim 1, **characterized in that** the hinges (20, 21, 22, 23) consist of heat-resistant plastic.

## Revendications

1. Dispositif (1) pour égoutter des aliments, comme par exemple des pâtes, du riz, des légumes ou de la salade, au moyen d'un panier présentant des zones percées, **caractérisé en ce que** le dispositif (1) se compose de deux parois (2, 3) qui délimitent dans la position d'utilisation du panier (1) un espace de forme conique, **en ce que** des parois triangulaires de délimitation (13, 14, 15, 16) sont connectées centralement aux côtés opposés (20, 21, 22, 23) des parois (2, 3) par le biais d'une autre charnière, en interposant des charnières (20, 21, 22, 23), **en ce que** les parois de délimitation (13, 14, 15, 16) sont connectées par le biais d'une autre charnière (24, 25) et des supports (10, 11) plats, parallèles, en forme de bande, dépassent depuis l'extrémité inférieure d'une paroi (2, 3), et pénètrent dans la position d'utilisation du panier (1) dans des évidements parallèles (12) de la paroi opposée.

2. Dispositif pour égoutter des aliments selon la revendication 1, **caractérisé en ce que** les parois opposées (2, 3) présentent sur le côté supérieur des évidements (6, 7) destinés à former des poignées (8, 9).

3. Dispositif pour égoutter des aliments selon la revendication 1, **caractérisé en ce que** les parois de délimitation latérales (13, 14, 15, 16) présentent une forme triangulaire et en coïncidence avec une ligne de connexion centrale, reçoivent un profil pour la formation d'une charnière (24, 25).

4. Dispositif pour égoutter des aliments selon la revendication 1, **caractérisé en ce que** chaque paroi (2, 3) présente dans la zone inférieure une rangée d'ouvertures (4, 5) pour laisser sortir un liquide.

5. Dispositif pour égoutter des aliments selon la revendication 1, **caractérisé en ce que** les parois de délimitation (13, 14, 15, 16) ont approximativement une forme triangulaire avec une pointe dirigée vers le bas.

6. Dispositif pour égoutter des aliments selon la revendication 5, **caractérisé en ce que** la paroi de délimitation (14) est connectée au moyen d'une charnière (20) de manière articulée à la paroi (2), **en ce que** la paroi de délimitation (13) est connectée au moyen d'une charnière (21) de manière articulée à la paroi (3), **en ce que** la paroi de délimitation (15) est connectée au moyen d'une charnière (22) à la paroi (3) et la paroi de délimitation (16) est connectée à l'aide d'une charnière (23) à la paroi (2).

7. Dispositif pour égoutter des aliments selon la revendication 1, **caractérisé en ce que** des ouvertures (4, 5) pour laisser sortir un liquide ne sont prévues que dans la partie inférieure des parois (2, 3), et **en ce que** les parois de délimitation latérales (13, 14, 15, 16) se composent de surfaces fermées, exemptes d'évidements.

8. Dispositif pour égoutter des aliments selon la revendication 1, **caractérisé en ce que** les parois de délimitation (15, 16, 13, 14) sont disposées parallèlement entre les parois (2, 3) dans la position de non utilisation du dispositif.

9. Dispositif pour égoutter des aliments selon la revendication 1, **caractérisé en ce que** le récipient (1) se compose de parois (2, 3, 13, 14, 15, 16) qui se composent de métal, de préférence d'acier fin.

10. Dispositif pour égoutter des aliments selon la revendication 1, **caractérisé en ce que** les parois (2, 3, 13, 14, 15, 16) du récipient (1) se composent de plastique résistant à la chaleur.

11. Dispositif pour égoutter des aliments selon la revendication 1, **caractérisé en ce que** les charnières (20, 21, 22, 23) se composent de métal, avantageusement d'acier fin.

12. Dispositif pour égoutter des aliments selon la revendication 1, **caractérisé en ce que** les charnières (20, 21, 22, 23) se composent de plastique résistant à la chaleur.
